# EUROPEAN PATENT SPECIFICATION

(11) **EP 2 179 238 B1**
(45) Date of publication and mention of the grant of the patent: **01.08.2012**
(21) Application number: 08775094.9
(22) Date of filing: 15.07.2008
(51) Int. Cl.: F28D 7/16, F28F 9/22, F28D 7/00, F28D 1/04, F28F 1/02

(54) **HEAT EXCHANGER WITH MINI- AND/OR MICRO-CHANNELS**
WÄRMETAUSCHER MIT MINI- UND/ODER MIKROKANÄLEN
ECHANGEUR DE CHALEUR POURVU DE MINICANAUX ET/OU DE MICROCANAUX

(30) Priority: 23.07.2007 IT PD20070250; 30.01.2008 EP 08150852
(43) Date of publication of application: 28.04.2010
(73) Proprietor: M.T.A. S.p.A., 35026 Conselve PD (IT)
(72) Inventor: BERNARDINELLO, Stefano, I-35021 Villatora di Saonara (PD) (IT); BOTTAZZO, Andrea, I-35020 Ponte San Nicolò (PD) (IT)
(74) Representative: Susanetto, Carlo
(86) International application number: PCT/EP2008/059235
(87) International publication number: WO 2009/013179

(56) References cited:
- EP-A- 1 203 923
- WO-A-2005/038375
- WO-A-2007/037670
- DE-U1- 20 118 511
- GB-A- 1 001 095
- JP-A- 10 267 585
- JP-A- 2000 346 584
- JP-A- 2003 314 927
- JP-A- 2006 200 862
- JP-A- 2006 200 864
- JP-A- 2007 017 132
- US-A- 4 942 654
- US-A- 5 709 028
- US-A1- 2003 178 188

## Description

### Technical field

The subject of the present invention is a heat exchanger according to the preamble of claim 1. Such a heat exchanger is known from WO 2005 038375.

The invention is proposed mainly, but not exclusively, for applications of exchangers having the function of evaporator, or condenser, for a liquid such as, for example, water, or for a compressed gas.

### Technological background

In this technical field, the exchangers defined above are sub-divided into exchangers with mini-channels and with micro-channels according to the measurement of the passage cross-section of the channels, which is obviously smaller in the micro-channels than the cross-section of the mini-channels. They are also known by the term parallel flow exchangers, and are mainly used for applications in the motor vehicle and heat technology field. In the first case such devices are employed for the cooling of the fluids circulating in the engines and of exchangers for the air-conditioning system of the vehicle, while in the second they are used as air condensers for refrigerating equipment.

The mini- and/or micro-channels are typically produced in pipes of flattened cross-section, by means of respective longitudinal dividing partitions. Such pipes, known by the term "multiport" tubes, in the applications described above are traversed by a thermal exchange medium such as, for example, a refrigerating fluid, and are typically connected to two manifold tubes, respectively for inlet and outlet. The multiport tubes are interconnected with one another by means of finning.

The typical geometric configuration is that of a radiator in which there are two front surfaces, respectively for inlet and outlet, for a primary working fluid of the gaseous type, typically ambient air, in thermal contact with the external walls of the multiport tubes and with the interconnecting finning. Exchangers of the aforesaid type are known, for example, from US 2006/0102332 and US 2002/0066554 or WO 2005/038375.

This type of exchanger proves unsuitable, from the point of view of thermodynamic efficiency, for applications in which the primary fluid consists of liquids, for example water, or of compressed gases. The geometry of such exchangers in fact provides a high ratio between front surface and longitudinal length, traversed by the primary fluid. As a consequence, in order to obtain a convenient value for the thermal exchange coefficient it is necessary to maintain the speed of the primary fluid through the finning at a high level. This, in the majority of cases in which the primary fluid is an incompressible, or a compressed gas, would result in values being reached for flow rate and/or pressure of the primary fluid through the front surface that are beyond the limits of technological and economic feasibility.

A solution to the problem could be to provide for the use of a plurality of exchangers with mini- and/or micro-channels finned with a reduced front surface which are arranged in series. However, this does not represent an optimum option either from the point of view of the overall dimensions, or of the relative complexity, or of the production costs.

### Description of the invention

The principal aim of the present invention is that of providing a heat exchanger with mini- and/or micro-channels which is structurally and functionally designed to remedy all the drawbacks mentioned with reference to the prior art cited. This aim is achieved by a heat exchanger according to claim 1.

### Brief description of the drawings

The characteristics and advantages of the invention will become clearer from the detailed description of a preferred, although not exclusive, embodiment thereof, provided by way of non-limiting example with reference to the appended drawings, in which:
- Figure 1 is a diagrammatic axonometric view of a heat exchanger with mini- and/or micro-channels which is not produced according to the invention;
- Figure 2 is a diagrammatic view of a detail of the exchanger of Figure 1;
- Figure 3 is a diagrammatic axonometric view of an alternative embodiment of a heat exchanger with mini- and/or micro-channels which is not produced according to the invention;
- Figure 4 is a sectional view of the exchanger of Figure 3;
- Figure 5 is a diagrammatic axonometric view of a further heat exchanger with mini- and/or micro-channels which is not produced according to the invention;
- Figures 6 and 7 are two exploded views of two respective details of a further heat exchanger with mini- and/or micro-channels which is not produced according to the invention;
- Figure 8 is an axonometric view of a detail of the alternative example of Figures 6 and 7, which does not form part of the invention.
- Figure 9 is an exploded view of a detail of a further heat exchanger with mini- and/or micro-channels which is not produced according to the invention;
- Figure 10 is a sectional view of a further heat exchanger with mini- and/or micro-channels which is not produced according to the invention.
- Figure 11 is a side view of a heat exchanger with mini- and/or micro-channels which is not produced according to the invention;
- Figure 12 is a sectional view of the exchanger of Figure 11;
- Figure 13 is a view on an enlarged scale of a detail of Figure 11;
- Figures 14 and 15 are sectional views of two respective alternative embodiments of a heat exchanger with mini- and/or micro-channels which is produced according to the invention;
- Figures 16 and 17 are two views corresponding to two different modes of operation of the exchanger of Figure 14;
- Figure 18 is an exploded sectional view of the exchanger of Figure 1;
- Figure 19 is a diagrammatic side view of heat exchanger with mini- and/or micro-channels which is not produced according to the invention;
- Figure 20 is a cross-section through the exchanger of Figure 19.

### Preferred embodiments of the invention

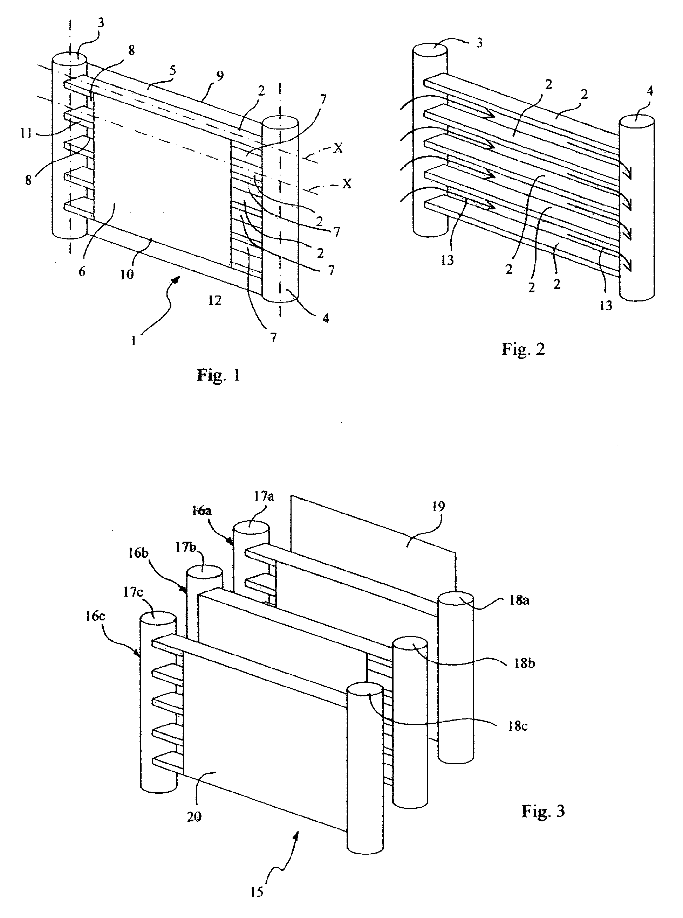

With reference to Figures 1 and 2 indicated above, a heat exchanger 1 with mini- and/or micro-channels comprises a plurality of multiport tubes 2 with flattened cross-section, traversed by a refrigerating fluid. The tubes 2 are substantially parallel to one another and extend between an inlet manifold 3 and an outlet manifold 4 for the refrigerating fluid, with a substantially longitudinal distribution, defined by the axis X of each tube 2. The distribution of the tubes 2 forms two opposed surfaces 5, 6, substantially parallel to the axis X, each of which forms a tangent to each of the tubes 2. The tubes 2 are mutually spaced by respective interspaces 7, devoid of finning. The exchanger 1 comprises blocking means extending between the tubes 2 and arranged to delimit in the interspaces 7 respective longitudinal channels 8, extending along the axis X. Such blocking means comprise respective blocking plates 9, 10 fitted respectively on the surfaces 5, 6. The channels 8, delimited by the tubes 2 and by the plates 9, 10, are traversed longitudinally by a primary thermal exchange fluid, for example water to be cooled, or a compressed gas.

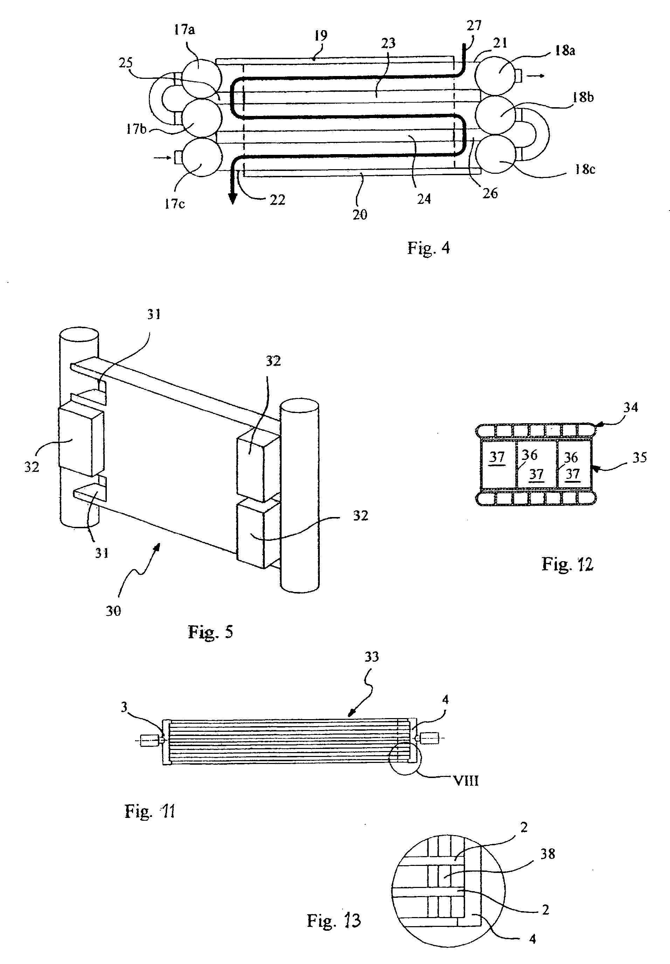

The plate 9 extends along the tubes 2, from one to the other of the manifolds 3, 4, so as to block the surface 5 completely. The plate 10 extends only at the central part of the tubes 2, so as to form, on the surface 6, two openings 11, 12 respectively adjacent to the manifolds 3, 4 and extending for the entire height of the exchanger 1, such that the openings 11, 12 communicate with all the channels 8. The openings 11, 12 respectively have the function of inlet and outlet for the water to be cooled, the path of which is shown diagrammatically in Figure 2 by the arrows 13. According to Figures 3 and 4, in a heat exchanger 15 with mini- and/or micro-channels a plurality of multiport tubes are disposed in a plurality of groups 16a,b,c (three groups in the example shown) side by side. Each group 16a,b,c is traversed by a refrigerating fluid and comprises a row of multiport tubes extending between a respective inlet manifold 17 a,b,c and a respective outlet manifold 18a,b,c. Each group comprises a plurality of interspaces, devoid of finning, between the respective multiport tubes. Substantially, each of the groups 16a,b,c is identical to the assembly of tubes 2 and manifolds 3,4 of the example in Figures 1 and 2. The exchanger 15, at the outer groups 16a and 16c, comprises two respective blocking plates 19, 20, extending respectively from the manifold 17a, 18c to a respective opening 21, 22, respectively adjacent to the opposite manifold 18a, 17c. The openings 21, 22, respectively inlet and outlet openings, for a flow of water to be cooled, communicate with all the interspaces of the respective groups 16a, 16c. Between each pair of adjacent groups, the exchanger 15 also comprises two further blocking plates 23, 24, also extending from a manifold to an opening 25, 26 located in proximity to the opposite manifold. Each of the openings 25, 26 permits the passage of the flow of water between each of the interspaces of one group to the corresponding interspace in the adjacent group.

The openings 21, 22, 25, 26 are alternated with one another in such a way that, for each pair of consecutive openings in the path 27 of the thermal exchange fluid, one opening is located in proximity to an inlet manifold 17a,b,c and the other opening is located in proximity to an outlet manifold 18a,b,c, or vice versa. In this way the thermal exchange fluid traverses the groups 16a,b,c in sequence, reversing the direction of flow when passing from one group to the adjacent one. In the examples of Figures 1 to 4, the flow of thermal exchange fluid circulating outside the multiport tubes is sub-divided into a number of parallel passages, each corresponding to an interspace in the exchanger 1 or in each of the groups 16a,b,c.

According to Figure 5, a heat exchanger 30 with mini- and micro-channels comprises a plurality of multiport tubes 2 and a plurality of interspaces 7, two manifolds 3, 4 and two surfaces 5, 6, in a manner similar to that described for the exchanger 1 and the groups 16a,b,c.

The exchanger 30 also comprises a plurality of adjacent and superposed sections 31 traversed in series by a thermal exchange fluid. Each section 31 comprises a respective interspace 7.

According to other examples not forming part of the present invention (not shown) each of the sections into which the exchanger is sub-divided comprises two or more interspaces 7.

The exchanger comprises a plurality of manifolds 32, protruding with respect to the surface 5, having the function of transferring the fluid between two adjacent sections 31. The manifolds 32 are located at the end of the corresponding sections 31 and substantially orthogonal to the latter. In the example of Figure 5, the flow of water to be cooled traverses the sections 31 in series, passing from one to the other via the manifolds 32. With respect to the examples of Figures 1 to 4, according to the flow rate of water to be cooled, in the exchanger 30 the reduced passage cross-section makes it possible to reach greater speeds, with a consequent increase in the thermal exchange coefficient.

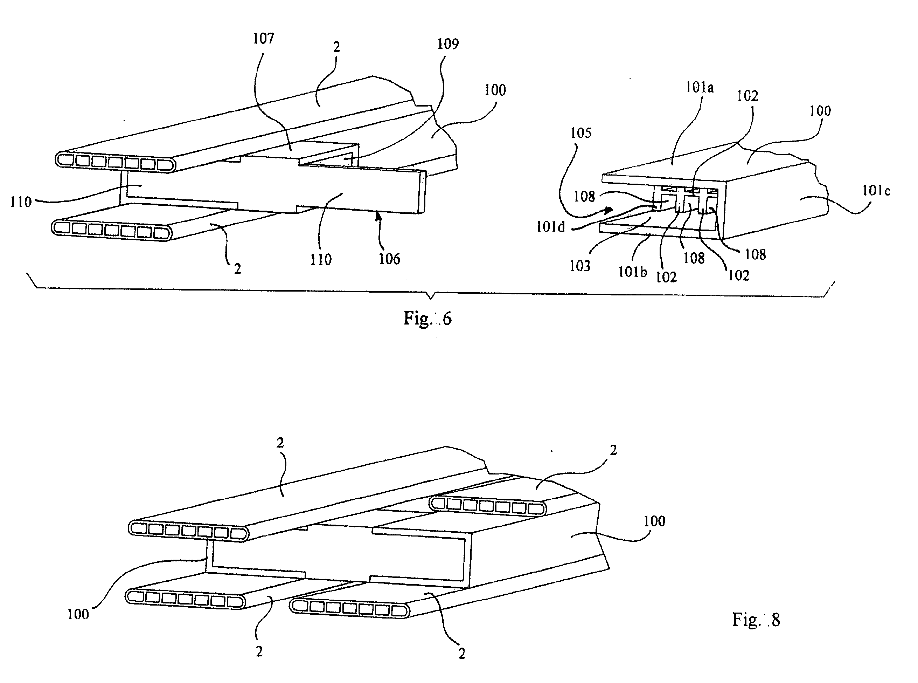

With reference to Figure 6 and following figures, according to other examples not forming part of the invention a plurality of longitudinal channels are provided in each of the interspaces 7.

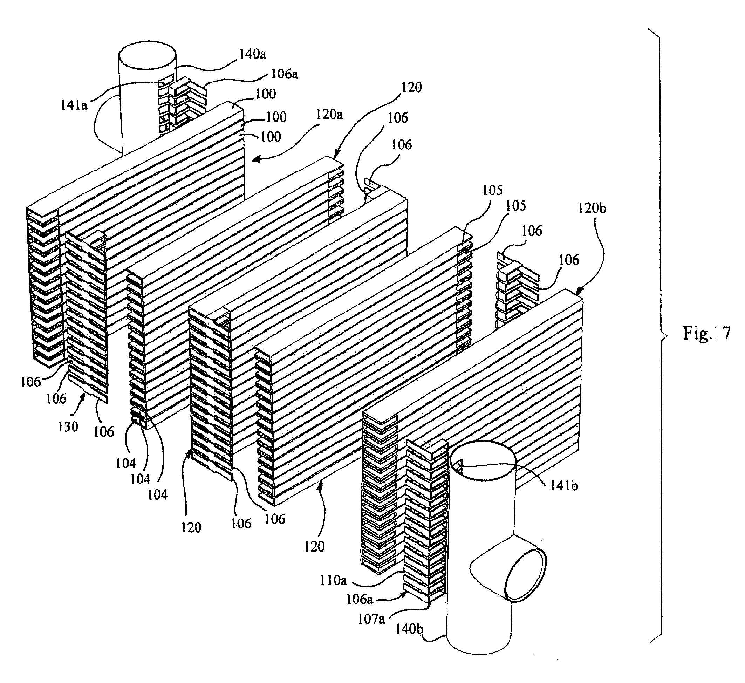

In the example of Figures 6 to 8, in each of the interspaces 7 an insert 100 is housed in which a plurality of longitudinal channels 108 are provided in one piece. The insert 100 has a rectangular cross-section and comprises two base walls 101a,b, two side walls 101c,d and a plurality of inner dividing partitions 102 by means of which the insert 100 is sub-divided into the channels 108. Each of the base walls 101a,b is adjacent to a respective multiport tube 2. At each of the longitudinal ends of the insert 100, the walls 101a,b,c protrude, in a longitudinal direction, with respect to the lateral wall 101d and to the inner dividing partitions 102, in such a way as to form a volume 103, within the insert 100 and provided with two apertures 104, 105, respectively longitudinal and lateral. As indicated in Figure 7, the inserts 100 are assembled into groups 120 so that two inserts 100 side by side, located on respective adjacent groups, are connected to each other by means of a manifold 106 located between two respective lateral apertures 105. The manifold 106 comprises a central hollow body 107, provided with two lateral apertures 109, respectively adjacent to the respective lateral apertures 105 of the two inserts 100 connected by means of the manifold 106. The manifold further comprises two wings 110, opposed with respect to the central body 107, each of which is coupled to a respective end of an insert 100 so as to close the longitudinal aperture 104. As a result of the coupling between a pair of inserts 100 and a manifold 106, the primary thermal exchange fluid passes from one to the other of the pair of inserts 100, passing through the central body 107 of the manifold 106. With each group 120 of inserts 100 there corresponds a group 130 of manifolds 106, which allows the primary thermal exchange fluid to pass to the following group 120. The two end groups 120a,b of inserts 100 are connected to two respective manifold tubes 140a,b, by means of two respective pluralities of manifolds 106a. Similarly to the manifolds 106, each of the manifolds 106a comprises a hollow central body 107a, for connection between the lateral aperture 105 of a respective insert 100 of the end group 120a,b and a respective aperture 141a,b of the manifold tube 140a,b. Each manifold 106a further comprises a wing 110a, coupled to a respective end of a respective insert 100 of the two end groups 120a,b, such as to close the respective longitudinal aperture 104. By means of the assembly described above and shown in the exploded view of Fig. 7, the primary thermal exchange fluid flows from one to the other of the manifold tubes 140a,b, flowing through the groups of inserts 120a, 120 and 120b connected to one another in sequence by means of the manifolds 106a, 106 and 106b.

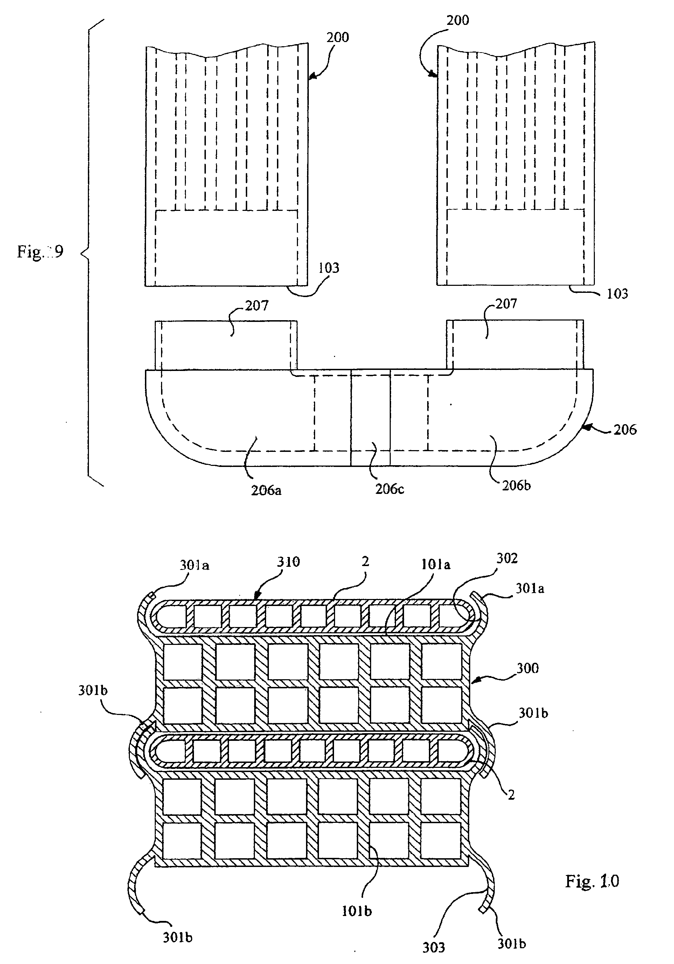

In the variant of Figure 9, the inserts 200 differ from the inserts 100 only in that they are devoid of lateral apertures 105. The ends of a pair of inserts 200 are connected by means of a U-shaped manifold 206. Each end 207 of the manifold 206 can be housed in the volume 103 of the respective insert 200 and is secured to the respective insert 200 by means of adhesive.

The manifold 206 is sub-divided into three portions 206a,b,c to facilitate assembly. The portions 206a,b comprise the respective ends 207 of the manifold 206, while the central portion 206c functions as a connection between the portions 206a,b. The three portions 206a,b,c are secured to one another by means of adhesive.

In the variant of Figure 10, the inserts 300 differ from the insert 200 only in that they are provided with two pairs of lateral profiles 301,a,b, respectively protruding from the edges of the walls 101a,b, parallel to the longitudinal direction of the insert 300. The pairs of lateral profiles 301a,b are turned towards a respective multiport tube 2, respectively adjacent to the wall 101a,b of the insert 300, and extend for the entire longitudinal length of the insert 300, being obtained in one piece therewith by means of extrusion. The lateral profiles 301a and the base 101a define a seating 302 for a respective multiport tube 2, in such a way that a modular assembly 310 can be defined, constituted by an insert 300 and a respective multiport tube 2. The lateral profiles 301b and the base 101b define a seating 303 for a pair of profiles 301a of another modular assembly 310. In this way, as indicated in Figure 10, a plurality of modular assemblies 310 can be coupled in series, to form a group of exchangers.

In the example of Figures 11, 12 and 13, an exchanger 33 comprises a plurality of pipes 34, of the micro-channel type, traversed by a refrigerating fluid. Housed in each interspace 7, between two adjacent pipes 34, is a respective pipe 35, of the mini-channel type, subdivided, by means of longitudinal dividing partitions 36, into a plurality of respective longitudinal channels 37. The pipes 35 are traversed by a primary thermal exchange fluid. In the case of arrangements in a group, similar to that indicated in Figure 3, the pipes 35 have at one or both of their longitudinal ends a cut 38, at 45°, so that the primary thermal exchange fluid can pass from one to the other of a pair of pipes 35 side by side, via two respective cuts 38 opposite each other.

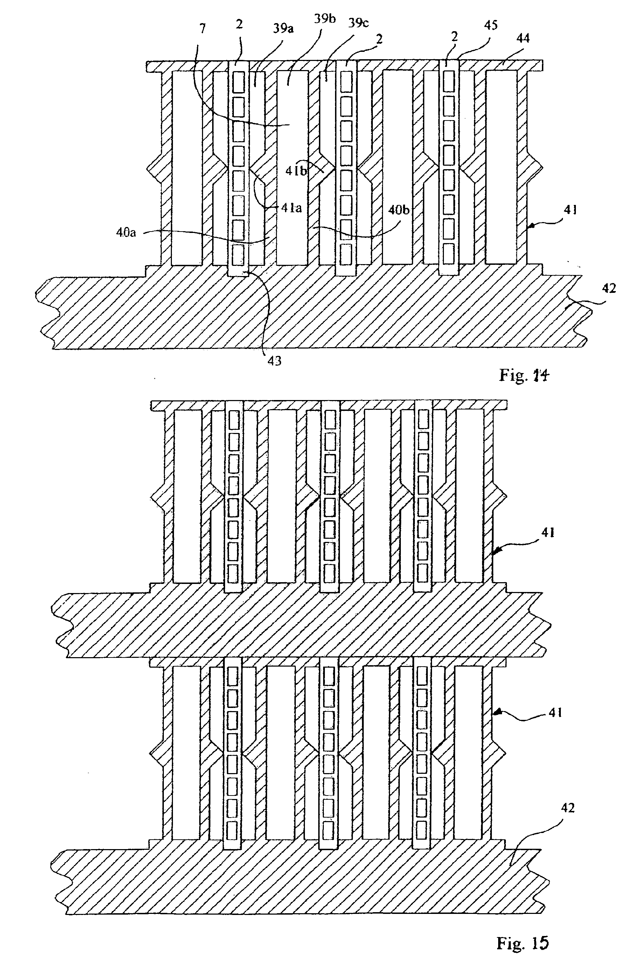

With reference to the embodiment of Figures 14 to 17, the interspaces 7 between the multiport tubes 2 comprise respective longitudinal, resiliently deformable channels 39a,b,c. The longitudinal channels 39a,b,c, for each interspace 7, comprise two substantially planar walls 40a,b disposed in said interspaces in a longitudinal direction, parallel to the tubes 2. The walls 40a,b are of plastics material, comprising an elastomer such as, for example, natural or synthetic rubber, and comprise a respective protuberance 41a,b in a middle position, facing towards the respective tube 2, adjacent to the wall 40a,b. The protuberances 41a,b maintain each multiport tube 2 equidistant from the walls 40a,b adjacent thereto. In this way, adhesion between one of the walls 40a,b and the tube 2, and the consequent closure of one of the longitudinal channels 39a,c, is prevented.

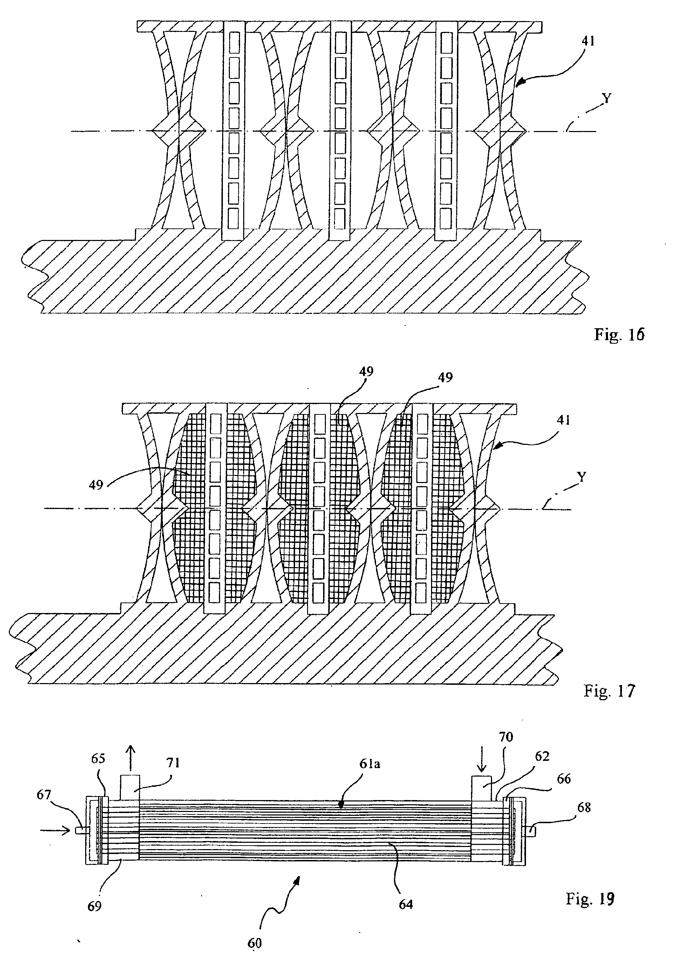

The longitudinal channels 39a,c, delimited by one of the tubes 2 and by the walls 40a,b, respectively, are traversed by a primary thermal exchange fluid, such as water to be cooled, in thermal contact with the refrigerating fluid circulating in the multiport tubes. The walls 40a,b are capable of flexing as a result of the pressure of the water to be cooled, in a direction of flexure Y substantially orthogonal to the longitudinal axis X. The longitudinal channel 39b, delimited by the walls 40a,b, contains stationary primary fluid or air, so as to be able to deform as a result of the pressure in the adjacent longitudinal channels 39a,c, as indicated in Figures 16 and 17. In other alternative embodiments of the invention (not shown) the longitudinal channels 39b contain resilient means deformable in the direction of flexure of the walls 40a,b. For example, such means may comprise springs or an insert of plastics material.

The deformation mechanism of the channelling 39a,b,c makes it possible to absorb any increases in flow rate of the primary thermal exchange liquid, as indicated in Figure 16, or in the case of the presence of ice formations, indicated with grids 49 in Figure 17. Moreover, in the event of an obstruction, for example due to solid impurities in the thermal exchange liquid, the deformation makes it possible to increase the pressure locally in order to remove the obstruction itself.

The walls 40a,b are comprised in one piece in an insert 41 of plastics material produced by means of extrusion. The insert 41 comprises a base 42 from which rise the walls 40a,b and in which a plurality of grooved seatings 43 are provided, facing towards the longitudinal channels 39a,c and in which the multiport tubes 2 are received. The walls 40a,b are connected to one another, at their opposite ends from the base 42, by a member 44, orthogonal thereto and provided with respective apertures 45 at the seatings 43 to permit the insertion of respective multiport tubes 2. Each insert 41 may be located beside another insert 41, as shown in Figure 15, in order to produce configurations of exchangers in a group of the type shown diagrammatically in Figure 3.

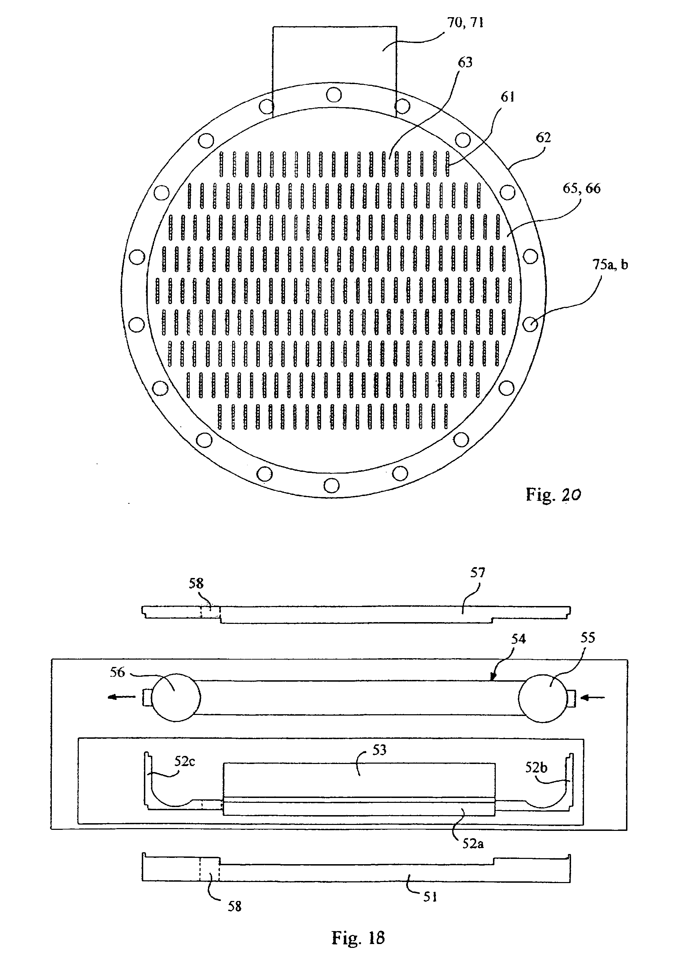

With reference to the exploded view in Figure 18, a heat exchanger 50 with mini- and/or micro-channels comprises an insert 53, of plastics material, comprising a plurality of longitudinal channels (not shown) for a primary thermal exchange fluid, and a plurality of seatings (not shown) for corresponding multiport tubes. The exchanger 50 is obtained by means of a method of manufacture comprising the steps of:
a. preparing a first base plate 51,
b. preparing a blocking member 52 comprising a blocking plate 52a, in a central position, and two seats 52b,c, located at two opposed longitudinal ends of the plate 52a and configured so that they can receive two respective manifolds,
   b1. disposing the blocking member 52 in such a way that the blocking plate 52a is adjacent to the plate 51 and the protuberances 52b,c face the opposite way with respect to the plate 51,
c. preparing, by means of the extrusion of a plastics material, the insert 53,
d. disposing the insert 53 on the blocking plate 52a,
e. preparing a group 54 of multiport tubes 2,
f. fixing the ends of the group 54 to two respective manifolds 55, 56, respectively for inlet and outlet. Fixing is effected by means of furnace brazing of the assembly consisting of the group of tubes 54 and the two manifolds 55, 56. Alternatively, fixing is effected by means of immersion in a thermostatically-controlled bath comprising molten brazing material,
g. disposing the assembly consisting of the group 54 and the manifolds 55, 56 in the insert 53 in such a way that the tubes 2 are received in the respective seatings and the manifolds 55, 56 are received in the respective seats 52b,c,
   g1. optional repetition of the aforesaid steps b) to g),
h. disposing a second plate 57 on the assembly obtained by means of the execution of the aforesaid steps a) to i),
i. providing fixing means, acting between the first plate 51 and the second plate 57, to render the components of the assembly obtained by means of the execution of the aforesaid steps from a) to i) firmly fixed to one another. Such means comprise one or more tie-rods (not shown) fitting into respective holes 58 provided in the plates 51,57, in the blocking surfaces 52 and in the inserts 53. Alternatively, a circumferential banding may be provided.

According to the example of Figures 19 and 20, an exchanger 60 with mini- and/or micro-channels comprises a plurality of multiport tubes 61 disposed so as to form a tube bundle 61a having a cross-section of circular profile, housed in a cylindrical tank 62.

In the central portion of the tube bundle 61a, in the interspaces 63 between the tubes 61, an insert 64 of plastics material is housed, comprising a plurality of longitudinal channels, extending parallel to the tubes 61 and resiliently deformable. The longitudinal channels permit the passage of a primary thermal exchange fluid, for example water to be cooled. The tubes 60 are fixed, at their opposed ends, by adhesive means, to two respective tube plates 65, 66. A two-shot resin may conveniently be employed as the adhesive. The tank 62 is connected, at its opposed ends, to two manifolds 67, 68, respectively for inlet and outlet, for the fluid circulating in all the tubes 61.

The tank 62 comprises a jacket 69 on which two apertures 70, 71 are provided, respectively for the inlet and for the outlet of the water in the exchanger 60.

The exchanger 60 is obtained by means of a method of manufacture comprising the steps of:
- preparing the tube plate 65, equipped with seating holes for the tubes 60,
- preparing the plurality of multiport tubes 60, of the micro-channel type,
- adhesively securing one end of each of the tubes 60 to the plate 65,
- preparing the insert 64 comprising a plurality of longitudinal channels, configured such as to be able to be inserted into the interspaces 63 between the tubes 60,
- inserting the insert 64 into the interspaces 63,
- preparing the tank 62 provided with the jacket 69 and the apertures 70, 71,
- inserting the assembly obtained in the preceding steps a) to e) inside the tank 62,
- fixing the tube plate 65 to the tank 62, by means of a plurality of screws 75a, disposed in a ring along the edge of the tube plate 65.
- adhesively securing the free end of each of the tubes 60 to the second plate 66 and fixing the plate 66 to the tank 62, by means of a plurality of screws 75b, arranged in a ring along the edge of the tube plate 66.
- connecting the tube plates 65, 66, respectively, to the inlet and outlet manifolds 67, 68.

The present invention, through the arrangement of the plurality of passages with mini- and/or micro-channels and of the interspaces 7, in particular in the resiliently deformable variant, provides an exchanger devoid of finning, having a high thermal efficiency also when the primary working fluid is a liquid or a compressed gas.

The invention therefore solves the problem mentioned with reference to the prior art cited, at the same time obtaining numerous advantages.

These include being able to employ the multiport technology to produce an evaporator for refrigerating a liquid, with the optional possibility of reverse cycle operation as a heat pump. The use of the longitudinal channels in the interspaces 7 makes it possible to increase the turbulence, to the advantage of the thermal exchange efficiency. In the case of deformable longitudinal channels, it is possible to remedy the drawbacks represented by abrupt increases in flow rate, by the solidification of the primary fluid, and by the formation of localised obstructions.

The use of the solution with a tube plate provides the possibility of producing compact geometries, of obtaining a thermal exchange in perfect counterflow, of limiting the presence of plates and tie-rods, of avoiding brazing operations, replacing them with more practical and economic adhesive securing operations, and improving the resistance to the solidification of the primary fluid.

## Claims

1. A heat exchanger, with mini- and/or micro-channels, comprising a plurality of multiport tubes (2), extending between respective manifolds with a substantially longitudinal distribution, said tubes (2) being:
a. parallel to one another and wherein said interspaces (7)
b. mutually spaced by respective interspaces (7) and
c. distributed so as to form opposed surfaces of the exchanger substantially parallel to the longitudinal direction (X) of said tubes,
and further comprising blocking means between said multiport tubes (2), arranged to delimit in said interspaces (7) respective longitudinal channels (39a) intended to be traversed longitudinally by a thermal exchange fluid, said blocking means comprising respective blocking plates (42, 44) fitted on said opposed surfaces
**characterized in that** each of said longitudinal channel (39a) comprises two walls (40a,b) disposed longitudinally in said interspaces (7), said two walls (40a,b) being capable of flexing as a result of the pressure of said thermal exchange fluid, in a direction of flexure substantially orthogonal to said longitudinal direction (X).

2. A heat exchanger (1) according to claim 1, wherein said blocking surfaces comprise inlet and outlet openings at the opposed ends of said interspaces (7).

3. A heat exchanger according to claim 2, wherein said multiport tubes (2) are disposed in a plurality of groups side by side, each group comprising a row of multiport tubes extending between an inlet manifold and an outlet manifold.

4. A heat exchanger according to claim 3, wherein between each pair of adjacent groups one of said blocking surfaces is interposed.

5. A heat exchanger (15) according to claim 3 or 4, wherein each of said rows of multiport tubes extends between a respective inlet manifold and a respective outlet manifold.

6. A heat exchanger according to claim 3 or 4, wherein each of the multiport tubes (2) extends between the same inlet manifold and the same outlet manifold.

7. A heat exchanger according to any of the preceding claims, wherein said longitudinal channels (39a) are resiliently deformable.

8. A heat exchanger according to claim 7, wherein said walls (40a,b) are of plastics material.

9. A heat exchanger according to claim 8, wherein said plastics material comprises an elastomer.

10. A heat exchanger according to any one of the preceding claims, wherein said exchanger comprises at least one insert (41) in which said walls (40a,b) and said plates (42, 44) are produced in one piece.

11. A heat exchanger (1) according to claim 10, wherein said multiport tubes (2) can be received in respective seatings of said insert.

12. A heat exchanger according to one or more of the preceding claims, wherein said thermal exchange fluid comprises a compressed gas.

13. A heat exchanger according to one or more of the preceding claims, wherein said multiport tubes (2) are traversed by a refrigerating fluid.

## Patentansprüche

1. Wärmetauscher mit Mini- und/oder Mikrokanälen, umfassend eine Mehrzahl von Multiportröhrchen (2), die sich mit einer im Wesentlichen längsgerichteten Verteilung zwischen zugehörigen Verteilern erstrecken, wobei die Röhrchen (2):
a. parallel zueinander sind und wobei die Zwischenräume (7)
b. durch zugehörige Zwischenräume (7) voneinander beabstandet sind und
c. so verteilt sind, dass sie einander zugewandte Oberflächen des Wärmetauschers bilden, die im Wesentlichen parallel zur Längsrichtung (X) der Röhrchen angeordnet sind,
und weiter umfassend Absperrmittel zwischen den Multiportröhrchen (2), die dazu ausgebildet sind, in den Zwischenräumen (7) zugehörige Längskanäle (39a) abzugrenzen, die dazu vorgesehen sind, dass sie in Längsrichtung von einem Wärmetauscherfluid durchströmt werden, wobei die Absperrmittel zugehörige Absperrplatten (42, 44) umfassen, die an den zugewandten Oberflächen angebracht sind,
**dadurch gekennzeichnet, dass** jeder der Längskanäle (39a) zwei Wände (40a,b) umfasst, die in den Zwischenräumen (7) längsgerichtet angeordnet sind, wobei die beiden Wände (40a,b) so ausgebildet sind, dass sie in Folge des Drucks des Wärmetauscherfluids in eine Biegerichtung im Wesentlichen orthogonal zur Längsrichtung (X) biegsam sind.

2. Wärmetauscher (1) nach Anspruch 1, wobei die Absperrflächen Einlass- und Auslassöffnungen an den gegenüberliegenden Enden der Zwischenräume (7) aufweisen.

3. Wärmetauscher nach Anspruch 2, wobei die Multiportröhrchen (2) in einer Mehrzahl von Gruppen nebeneinander angeordnet sind, wobei jede Gruppe eine Reihe von Multiportröhrchen umfasst, die sich zwischen einem Einlassverteiler und einem Auslassverteiler erstrecken.

4. Wärmetauscher nach Anspruch 3, wobei zwischen einem jeweiligen Paar benachbarter Gruppen eine der Absperrflächen eingesetzt ist.

5. Wärmetauscher (15) nach Anspruch 3 oder 4, wobei eine jeweilige Reihe von Multiportröhrchen sich zwischen einem zugehörigen Einlassverteiler und einem zugehörigen Auslassverteiler erstreckt.

6. Wärmetauscher nach Anspruch 3 oder 4, wobei eine jeweiliges der Multiportröhrchen (2) sich zwischen dem gleichen Einlassverteiler und dem gleichen Auslassverteiler erstreckt.

7. Wärmetauscher nach einem der vorhergehenden Ansprüche, wobei die Längskanäle (39a) elastisch verformbar sind.

8. Wärmetauscher nach Anspruch 7, wobei die Wände (40a,b) aus Kunststoffmaterial gebildet sind.

9. Wärmetauscher nach Anspruch 8, wobei das Kunststoffmaterial ein Elastomer umfasst.

10. Wärmetauscher nach einem der vorhergehenden Ansprüche, wobei der Wärmetauscher mindestens einen Einsatz (41) umfasst, bei dem die Wände (40a,b) und die Platten (42, 44) einstückig ausgebildet sind.

11. Wärmetauscher (1) nach Anspruch 10, wobei die Multiportröhrchen (2) in zugehörige Aufnahmen des Einsatzes aufgenommen werden können.

12. Wärmetauscher nach einem oder mehreren der vorhergehenden Ansprüche, wobei das Wärmetauscherfluid ein komprimiertes Gas umfasst.

13. Wärmetauscher nach einem oder mehreren der vorhergehenden Ansprüche, wobei die Multiportröhrchen (2) von einem Kältefluid durchströmt werden.

## Revendications

1. Echangeur de chaleur avec des mini- et/ou des micro-canaux, comprenant une pluralité de tubes à voies multiples (2), s'étendant entre des distributeurs respectifs avec une distribution sensiblement longitudinale, lesdits tubes (2) étant :
a. parallèles les uns aux autres et dans lequel lesdits espacements (7)
b. espacés mutuellement par des espacements (7) respectifs et
c. distribués de façon à former des surfaces opposées de l'échangeur sensiblement parallèles à la direction longitudinale (X) desdits tubes
et comprenant en outre des moyens de blocage entre lesdits tubes à voies multiples (2), agencés pour délimiter dans lesdits espacements (7) des canaux longitudinaux respectifs (39a) destinés à être traversés longitudinalement par un fluide d'échange thermique, lesdits moyens de blocage comprenant des plaques de blocage respectives (42, 44) montées sur lesdites surfaces opposées
**caractérisé en ce que** chacun desdits canaux longitudinaux (39a) comprend deux parois (40a, b) disposées longitudinalement dans lesdits espacements (7), lesdites deux parois (40a, b) pouvant fléchir en résultat de la pression dudit fluide d'échange thermique, dans une direction de flexion sensiblement orthogonale à ladite direction longitudinale (X).

2. Echangeur de chaleur (1) selon la revendication 1, dans lequel lesdites surfaces de blocage comprennent des ouvertures d'entrée et de sortie aux extrémités opposées desdits espacements (7).

3. Echangeur de chaleur selon la revendication 2, dans lequel lesdits tubes à voies multiples (2) sont disposés en une pluralité de groupes côte à côte, chaque groupe comprenant une rangée de tubes à voies multiples s'étendant entre un distributeur d'entrée et un distributeur de sortie.

4. Echangeur de chaleur selon la revendication 3, dans lequel entre chaque paire de groupes adjacents l'une des surfaces de blocage est intercalée.

5. Echangeur de chaleur (15) selon la revendication 3 ou 4, dans lequel chacune desdites rangées de tubes à voies multiples s'étend entre un distributeur d'entrée respectif et un distributeur de sortie respectif.

6. Echangeur de chaleur selon la revendication 3 ou 4, dans lequel chacun des tubes à voies multiples s'étend entre le même distributeur d'entrée et le même distributeur de sortie.

7. Echangeur de chaleur selon l'une quelconque des revendications précédentes, dans lequel lesdits canaux longitudinaux (39a) sont déformables élastiquement.

8. Echangeur de chaleur selon la revendication 7, dans lequel lesdites parois (40a, b) sont faites de matière plastique.

9. Echangeur de chaleur selon la revendication 8, dans lequel ladite matière plastique est composée d'un élastomère.

10. Echangeur de chaleur selon l'une quelconque des revendications précédentes, dans lequel ledit échangeur comprend au moins un insert (41) dans lequel lesdites parois (40a, b) et lesdites plaques (42, 44) sont produites en une seule pièce.

11. Echangeur de chaleur (1) selon la revendication 10, dans lequel lesdits tubes à voies multiples (2) peuvent être reçus dans des sièges respectifs dudit insert.

12. Echangeur de chaleur selon une ou plus des revendications précédentes, dans lequel ledit fluide d'échange thermique est composé d'un gaz sous pression.

13. Echangeur de chaleur selon l'une quelconque des revendications précédentes, dans lequel lesdits tubes à voies multiples (2) sont traversés par un fluide réfrigérant.
